(19) Europäisches Patentamt
European Patent Office
Office européen des brevets

(11) Veröffentlichungsnummer: **0 152 371**
**B1**

(12) **EUROPÄISCHE PATENTSCHRIFT**

(45) Veröffentlichungstag der Patentschrift: **26.04.89**

(51) Int. Cl.⁴: **C 08 F 22/04**, C 07 C 61/35, C 08 G 59/42

(21) Anmeldenummer: **85810023.3**

(22) Anmeldetag: **25.01.85**

(54) **Polymere aus Allyl- oder Methallyl-substituierten bicyclischen ungesättigten Dicarbonsäureanhydriden.**

(30) Priorität: **31.01.84 CH 448/84**

(43) Veröffentlichungstag der Anmeldung: **21.08.85 Patentblatt 85/34**

(45) Bekanntmachung des Hinweises auf die Patenterteilung: **26.04.89 Patentblatt 89/17**

(84) Benannte Vertragsstaaten: **CH DE FR GB IT LI NL**

(56) Entgegenhaltungen:
**FR-A- 2 271 237**
**US-A- 3 105 839**
**US-A- 3 287 395**

(73) Patentinhaber: **CIBA-GEIGY AG**
**Klybeckstrasse 141**
**CH-4002 Basel (CH)**

(72) Erfinder: **Renner, Alfred, Dr.**
**Marcoup 2**
**CH-3280 Muntelier (CH)**
Erfinder: **Haug, Theobald, Dr.**
**Untere Flühackerstrasse 12**
**CH-4402 Frenkendorf (CH)**
Erfinder: **Schreiber, Bruno, Dr.**
**Herrenweg 8**
**CH-4147 Aesch (CH)**

**EP 0 152 371 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft Polymere aus Allyl- oder Methallyl-substituierten Bicyclo [2.2.1] hept-5-en-2,3-dicarbonsäureanhydriden, ein Verfahren zu ihrer Herstellung, härtbare Gemische enthaltend eine Polyepoxidverbindung und solche Polymeren als Härter sowie deren Verwendung als Härter für Polyepoxidverbindungen mit durchschnittlich mehr als einer Epoxidgruppe im Molekül.

Polymere aus bicyclischen Dicarbonsäureanhydriden sind bekannt. So zum Beispiel beschreibt die DE-OS 2 521 152 Polymere aus unsubstituiertem cis-5-Norbornen-2,3-dicarbonsäureanhydrid, mit anderen Worten aus unsubstituiertem cis-Bicyclo [2.2.1] hept-5-en-2,3-dicarbonsäureanhydrid. Ferner wird ein Verfahren zur Herstellung dieser Polymere durch thermische Polymerisation des Anhydrids in Gegenwart eines Radikalbildners offenbart.

Aus der US-A-3 287 395 ist bekannt, dass man Methallyl-bicyclo [2.2.1]-hept-5-en-2,3-dicarbonsäureanhydrid in Gegenwart eines $BF_3$-Essigsäure Katalysators polymerisieren kann. Eine Verwendung für das polymere Produkt wird nicht angegeben.

Es wurden nun neue Polymere aus Allyl- oder Methallyl-substituierten Bicyclo-[2.2.1] hept-5-en-2,3-dicarbonsäureanhydriden gefunden, welche wertvolle physikalische Eigenschaften aufweisen. Ueberraschenderweise führt die Polymerisation des Anhydrids, in der sowohl die Allyl- oder Methallyldoppelverbindung als auch die Ringdoppelbindung beteiligt sind, nicht zu vernetzen und damit zu unschmelzbaren und unlöslichen oder schwerlöslichen Produkten, sondern zu schmelzbaren und löslichen Polymeren mit gegebenenfalls hohen Erweichungspunkten, die sich als Epoxidhärter einsetzen lassen.

Gegenstand vorliegender Erfindung sind daher Polymere erhältlich durch Polymerisation eines oder mehrerer Anhydride der Formel I

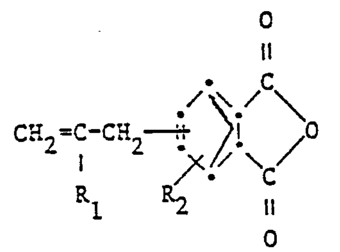

(I)

worin $R_1$ und $R_2$ unabhängig voneinander Wasserstoff oder Methyl bedeuten, mit Ausnahme von Homopolymeren erhältlich durch Polymerisation von Methallyl-bicyclo [2.2.1] hept-5-en-2,3-dicarbonsäureanhydrid.

Bevorzugt ist $R_1$ in der Formel I Wasserstoff. Besonders bevorzugt sind Polymere aus Anhydriden der Formel I, insbesondere aus einem Anhydrid der Formel I, worin beide $R_1$ und $R_2$ Wasserstoff bedeuten.

Unter den erfindungsgemässen Polymeren werden dimere, oligomere und höhermolekulare Produkte aus den Anhydriden der Formel I verstanden. Sie weisen vorzugzweise einen Polymerisationsgrad von 2-100, besonders 2-20 und insbesondere 2-6 auf. Bevorzugt als erfindungsgemässe Polymere sind Homopolymere aus einem Anhydrid der Formel I, ausgenommen Homopolymere von Methallyl-bicyclo [2.2.1] hept-5-en-2,3-dicarbonsäureanhydrid.

Die Stellung der beiden Substituenten $-CH_2-C(R_1)=CH_2$ und $R_2$ = Methyl kann nicht eindeutig festgelegt werden. Es wird vermutet, dass sie sich in einer der Stellungen 1, 4, 5 oder 6 des Bicycloheptenringes befinden. Diese Stellungen können jedoch infolge der bis heute nicht restlos abgeklärten chemischen Struktur der entsprechenden Anhydride der Formel I nicht eindeutig festgelegt werden.

Die Polymeren aus den Anhydriden der Formel I sind dadurch erhältlich, dass man ein oder mehrere Anhydride der Formel I auf eine Temperatur zwischen 150 °C und 350 °C erhitzt. Die Polymerisation kann 1 bis 30 Stunden lang dauern.

Im Gegensatz zum in der DE-OS 2 521 152 beschriebenen Polymerisations-verfahren zur Herstellung von polymerem cis-5-Norbornen-2,3-dicarbonsäureanhydrid, beschleunigen Radikalbildner, wie organische Peroxide, die vorliegende Polymerisation nicht. Ueberraschenderweise können jedoch die Polymeren aus Anhydriden der Formel I in Abwesenheit eines Radikalbildners durch blosses Erhitzen hergestellt werden. Ferner kann die Polymerisation unerwarteterweise in Gegenwart mindestens eines für die kationische Polymerisation geeigneten Katalysators durchgeführt werden.

Geeignete Katalysatoren sind z. B. Bronsted-Oxosäuren, deren Ester und Halogenid-Derivate und Lewis-Säuren. Als Oxo-Säuren eignen sich sowohl Mineralsäuren, beispielsweise $H_2SO_4$, $H_3PO_3$, $H_3PO_4$ als auch organische Säuren, wie z. B. Methansulfonsäure, Benzolsulfonsäure, p-Toluolsulfonsäure, Naphthalin-2-sulfonsäure oder Phenylphosphonsäure.

Als Ester-Derivat von Oxo-Säuren kommt z. B. Triphenylphosphit oder 1,4-Butandiol-bis-p-toluolsulfonat in Frage.

Als Säurehalogenide kommen insbesondere die Chloride der genannten Oxo-Säuren in Frage.

Geeignete Lewis-Säuren sind z. B. Halogenide von Elementen aus der Gruppe II, III, IV oder V des periodischen Systems. Besonders geeignet sind beispielsweise $FeCl_3$, $ZnCl_2$, $BCl_3BF_3$, $AlCl_3$, $TiCl_4$, $SnCl_4$ oder $SbCl_5$.

Die Katalysatoren können in Mengen von 0,1 bis 5 Gew.-%, vorzugsweise 0,5 bis 2 Gew.-%, bezogen auf das Reaktionsgemisch, eingesetzt werden.

Die Polymeren aus Anhydriden der Formel I sind vorzugsweise dadurch erhältlich, dass man die Polymerisation in Abwesenheit eines Katalysators durchführt.

Bevorzugt erhitzt man ein Anhydrid der Formel I auf eine Temperatur von 180 bis 230 °C, insbesondere während 12 bis 24 Stunden.

Die Polymerisation erfolgt vorteilhafterweise in Abwesenheit eines Lösungsmittels. Sie kann aber auch in Gegenwart eines beliebigen organischen Lösungsmittels, das gegenüber der Anhydridfunktion inert ist, also keinen aktiven Wasserstoff enthält, durchgeführt werden. Als Lösungsmittel eignen sich z. B. hochsiedende aliphatische, aromatische und araliphatische Kohlenwasserstoffe, wie z. B. Xylol, Toluol, Tetralin oder Isododekan.

Die Anhydride der Formel I können gemäss dem im US Patent 3 105 839 beschriebenen Verfahren hergestellt werden, indem man Natriumcyclopentadienid der Formel II

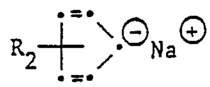 (II)

worin $R_2$ die in der Formel I angegebene Bedeutung hat, mit einem Allyl- oder Methallylhalogenid umsetzt und anschliessend mit Maleinsäureanhydrid ein Diels-Alder-Addukt der Formel I bildet.

Obgleich im genannten US Patent angegeben wird, dass die Allylgruppe in 7-Stellung des Bicycloheptens gebunden ist, zeigen neuere Untersuchungen, dass eine isomere Mischung in Bezug auf die Stellung der Allylgruppe und auch auf die endo- und exo-Konfiguration des Anhydridteils gebildet wird :

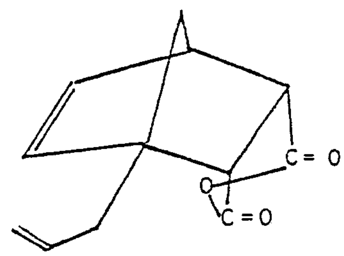

1-Allyl ; cis ; endo

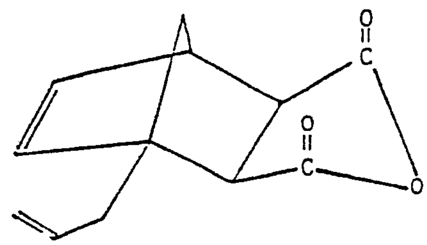

1-Allyl ; cis ; exo

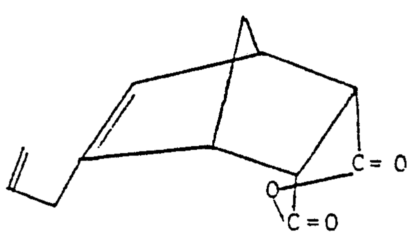

6-Allyl ; cis ; endo

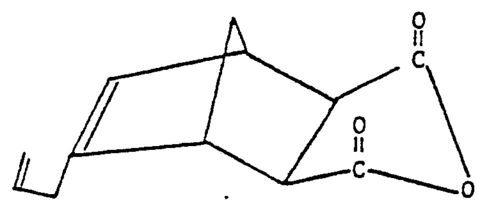

6-Allyl ; cis ; exo

Aufgrund der NMR- und IR-Spektren und den Glasumwandlungstemperaturen werden folgende Struktureinheiten der erfindungsgemässen Polymere für wahrscheinlich gehalten :

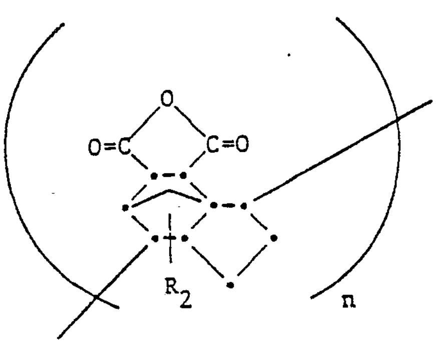

und

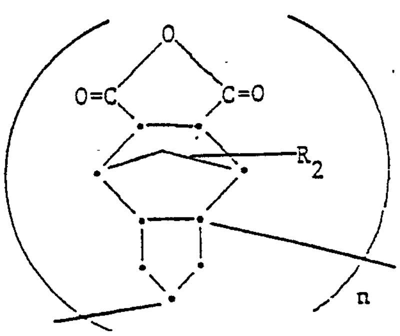

wobei n vorzugsweise 2-100 und insbesondere 2-6 darstellt.

Die erfindungsgemässen Polymere zeichnen sich durch gute Löslichkeit in organischen Lösungsmitteln, beispielsweise in Ketonen und Estern, durch gute Mischbarkeit mit Epoxidharzen und durch hohe Glasumwandlungstemperaturen aus. Die erfindungsgemässen Polymere sind feste Harze, deren Erweichungspunkte durch Variieren des Polymerisationsgrads an die jeweiligen Anwendung angepasst werden können. Das Variieren des Polymerisationsgrades geschieht vorzugsweise durch Aenderung der Reaktionszeit und/oder der Reaktionstemperatur. Bevorzugt sind Polymere, mit Erweichungspunkten zwischen 80 °C und 250 °C, besonders 100 °C und 200 °C.

Die Polymeren aus Anhydriden der Formel I eignen sich hervorragend als Härter für Epoxidharze. Ein weiterer Gegenstand vorliegender Erfindung sind daher härtbare Gemische, welche ein Polymer des Anhydrids der Formel I und eine Polyepoxidverbindung mit durchschnittlich mehr als einer Epoxidgruppe im Molekül enthalten.

Als Polyepoxidverbindungen kommen für die erfindungsgemässen härtbaren Gemische solche mit durchschnittlich mehr als einer an ein Heteroatom, vorzugsweise Sauerstoff oder Stickstoff, gebundenen Glycidylgruppe oder ß-Methylglycidylgruppe oder solche mit durchschnittlich mehr als einer Epoxycyclohexylgruppierung in Frage. Genannt seien beispielsweise :

a) Di- bzw. Polyglycidyläther von mehrwertigen aliphatischen Alkoholen, wie 1,4-Butandiol, Neopentylglykol, oder von Polyalkylenglykolen, wie Polypropylenglykolen,

b) Di- oder Polyglycidyläther von cycloaliphatischen Polyolen, wie 2,2-Bis-(4-hydroxycyclohexyl)-propan, 1,4-Bis-(hydroxymethyl)-cyclohexan,

c) Di- bzw. Polyglycidyläther von mehrwertigen Phenolen, wie Resorcin, Bis-(p-hydroxyphenyl)-methan (Bisphenol F), 2,2-Bis-(p-hydroxyphenyl)-propan (Bisphenol A), 2,2-Bis-(4'-hydroxy-3',5'-dibromphenyl) propan(Tetrabrom-Bisphenol A), 1,1,2,2-Tetrakis-(p-hydroxyphenyl)-äthan, oder von unter sauren Bedingungen erhaltenen Kondensationsprodukten von Phenol oder Alkylphenolen mit bis zu 9 C-Atomen in der Alkylgruppe mit Formaldehyd, wie Phenol-Novolake und Kresol-Novolake,

d) Di- bzw. Poly-(ß-methylglycidyl) äther der oben angeführten mehrwertigen Alkohole oder mehrwertigen Phenole,

e) Verbindungen mit Epoxycyclohexylgruppierungen, wie 3,4-Epoxycyclohexylcarbonsäure-3',4'-epoxycyclohexylmethyl-ester, 3-(3',4'-Epoxycyclohexyl)-2,4-dioxa-spiro-[5,5]-8,9-epoxyundecan, Adipinsäure-bis-(3,4-epoxycyclohexylmethyl)-ester,

f) Di- bzw. Polyglycidylester mehrwertiger Carbonsäuren, wie Phthalsäure, Terephthalsäure, $\Delta^4$-Tetrahydrophthalsäure, Hexahydrophthalsäure, Trimellitsäure, Oxalsäure, Malonsäure, Adipinsäure, Bernsteinsäure, Fumarsäure, Maleinsäure,

g) N-Glycidylderivate von Aminen, Amiden und heterocyclischen Stickstoffbasen, wie N,N-Diglycidylanilin, N,N-Diglycidyltoluidin, N,N,N',N'-Tetraglycidyl-bis-(p-aminophenyl) methan ; Triglycidyl-verbindungen des p-Hydroxyanilins ; Triglycidylisocyanurat ; N,N'-Diglycidyläthylenharnstoff ; N,N'-Diglycidyl-5,5-dimethylhydantoin, N,N'-Diglycidyl-5-isopropylhydantoin ; N,N'-Diglycidyl-5,5-dimethyl-6-isopropyl-5,6-dihydrouracil.

Besonders bevorzugt setzt man in den erfindungsgemässen Gemischen gegebenenfalls vorverlängerte Diglycidyläther von zweiwertigen Phenolen, vor allem 2,2-Bis(4-hydroxyphenyl) propan, 2,2-Bis(3,5-dibrom-4-hydroxyphenyl) propan, Bis(4-hydroxyphenyl) methan, Bis(4-hydroxycyclohexyl) methan und 2,2-Bis(4-hydroxycyclohexyl) propan, Polyglycidyläther von Novolaken, oder tetraglycidyliertes 4,4'-Diaminodiphenylmethan ein. Ganz besonders bevorzugt sind gegebenenfalls vorverlängerte Diglycidyläther von Bisphenol A, Tetrabrom-Bisphenol A oder Bisphenol F, tetraglycidyliertes 4,4'-Diaminodiphenylmethan, Polyglycidyläther von Phenol-Formaldehyd- oder Kresol-Formaldehyd-Novolaken, oder Gemische davon.

Es können auch Mischungen der genannten Di- und Polyepoxide eingesetzt werden.

Die erfindungsgemässen härtbaren Mischungen können ferner vor der Härtung in irgendeiner Phase mit üblichen Modifizierungsmitteln, wie Streck-, Füll- und Verstärkungsmitteln, Pigmenten, Farbstoffen, organischen Lösungsmitteln, Weichmachern, Verlaufmitteln, Thixotropiermitteln, flammhemmenden Stoffen oder Formtrennmitteln, versetzt werden.

Als Streckmittel, Verstärkungsmittel, Füllmittel und Pigmente, die in den erfindungsgemässen härtbaren Mischungen eingesetzt werden können, seien z. B. genannt : Steinkohlenteer, Bitumen, flüssige Cumaron-Inden-Harze, Textilfasern, Glasfasern, Asbestfasern, Borfasern, Kohlenstoffasern, Cellulose, Polyäthylenpulver, Polypropylenpulver, Quarzmehl, mineralische Silikate, wie Glimmer, Asbestmehl, Schiefermehl, Kaolin, Aluminiumoxidtrihydrat, Kreidemehl, Gips, Bentone, Kieselsäureaerogel, Lithopone, Schwerspat, Titandioxid, Russ, Graphit, Oxidfarben, wie Eisenoxid, oder Metallpulver, wie Aluminiumpulver oder Eisenpulver. Als Flammschutzmittel eignet sich z. B. Antimontrioxid.

Als organische Lösungsmittel eignen sich für die Modifizierung der härtbaren Mischungen z. B. Toluol, Xylol, Butylacetat, Aceton und Methyläthylketon.

Als Weichmacher können für die Modifizierung der härtbaren Mischungen z. B. Dibutyl-, Dioctyl- und Dinonylphthalat, Trikresylphosphat, Trixylenylphosphat und Diphenoxyäthylformat eingesetzt werden.

Als Verlaufmittel beim Einsatz der härtbaren Mischungen speziell im Oberflächenschutz, kann man z. B. Silikone, flüssige Acrylharze, Celluloseacetobutyrat, Polyvinylbutyral, Wachse, Stearate etc. (welche z. T. auch als Formtrennmittel Anwendung finden) zusetzen.

Die Härtung der erfindungsgemässen härtbaren Mischungen zu Formkörpern und dergleichen

erfolgt zweckmässig im Temperaturintervall von 80°-250 °C, vorzugsweise zwischen 170 °C und 220 °C. Man kann die Härtung in bekannter Weise auch zwei- oder mehrstufig durchführen, wobei die erste Härtungsstufe bei niedriger Temperatur und die Nachhärtung bei höherer Temperatur durchgeführt wird.

Wenn die Gelier- bzw. Härtungszeiten verkürzt werden sollen, können bekannte Härtungskatalysatoren zugesetzt werden. Geeignete Katalysatoren sind z. B. tertiäre Amine wie Triäthylamin oder Benzyldimethylamin, Pyridin und substituierte Pyridinderivate, wie z. B. 4-Dimethylaminopyridin oder N-p-Chlorphenyl-N',N'-dimethylharnstoff (« Monuron »).

Die Katalysatoren können in Mengen von 0,1 bis 5 Gew.-%, vorzugsweise 0,1 bis 2 Gew.-%, bezogen auf das Reaktionsgemisch, eingesetzt werden.

Die Herstellung der erfindungsgemässen härtbaren Gemische kann in üblicher Weise mit Hilfe bekannter Mischaggregate (Rührer, Kneter, Walzen oder im Falle fester Substanzen bzw. Pulver in Mühlen oder Trockenmischern) erfolgen. In machen Fällen ist ein kurzes Erwärmen des Gemisches erforderlich, um eine genügende Homogenität zu erreichen.

Die erfindungsgemässen härtbaren Gemische finden ihren Einsatz vor allem auf den Gebieten des Oberflächenschutzes, der Elektrotechnik, der Laminierverfahren, der Klebstofftechnik und im Bauwesen. Sie können in jeweils dem speziellen Anwendungszweck angepasster Formulierung, im ungefüllten oder gefüllten Zustand, gegebenenfalls in Form von Lösungen oder Emulsionen, als Pressmassen, Klebstoffe, Laminierharze und Matrixharze für « Composites » verwendet werden.

## Herstellungsbeispiele

### Beispiel 1

Polymerisation von Allyl-bicyclo [2.2.1] hept-5-en-2,3-dicarbonsäureanhydrid der Formel

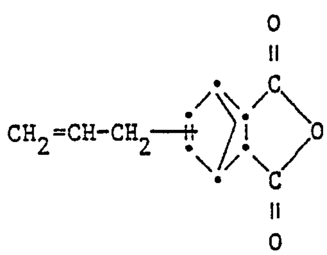

250 Teile des Anhydrids werden unter Rühren und Einleiten von Stickstoff auf 200 °C erhitzt. Weitere 750 Teile des Anhydrids werden so zugetropft, dass die Temperatur 200 °C nicht überschreitet. Nach 10 Stunden erhält man ein braunes Festharz mit folgenden Eigenschaften :

| | |
|---|---|
| Erweichungspunkt (EP) | 90 °C |
| Anhydridgehalt | 3,79 Val/kg |
| Säuregehalt | 0,025 Val/kg |
| Zahlenmittel des Molgewichts ($\overline{M}_n$) | 463 |
| Gewichtsmittel des Molgewichts ($\overline{M}_w$) | 1419 |

### Beispiele 2-5

Man polymerisiert das gleiche Anhydrid wie im Beispiel 1 und verfährt gemäss diesem Beispiel, wobei jedoch die Polymerisationszeit variiert wird.

In der folgenden Tabelle 1 sind die Eigenschaften der Polymere als Funktion der Polymerisationsdauer bei 200 °C dargestellt.

Tabelle 1

| Beispiel Nr. | Polymerisationsdauer (in Stunden) | Anhydridgehalt (Val/kg) | Säuregehalt (Val/kg) | EP (°C) | $\overline{M}_n$ | $\overline{M}_w$ |
|---|---|---|---|---|---|---|
| 2 | 13 | 3,99 | 0,028 | 120 | 463 | 1420 |
| 3 | 16 | 3,89 | 0,026 | 158 | 518 | 1657 |
| 4 | 18 | 3,84 | 0,030 | 170 | 641 | 2133 |
| 5 | 24 | 3,79 | 0,038 | 200 | 778 | 3118 |

Beispiel 6

Polymerisation von Allyl-bicyclo [2.2.1] hept-5-en-2,3-dicarbonsäureanhydrid der Formel

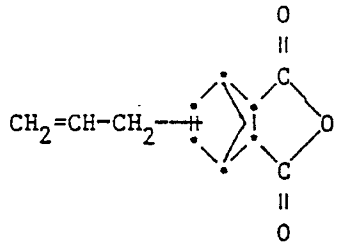

200 Teile des Anhydrids werden unter Rühren und Einleiten von Stickstoff auf 240 °C erhitzt. Eine exotherme Reaktion setzt daraufhin ein und die Temperatur steigt bis auf 300 °C. Man kühlt das Reaktionsgemisch auf 240 °C ab und hält es während einer Stunde bei dieser Temperatur.

Man erhält ein dunkelbraunes Festharz mit folgenden Eigenschaften :

| | |
|---|---|
| Erweichungspunkt (EP) | 238 °C |
| Anhydridgehalt | 3,28 Val/kg |
| Säuregehalt | 0,50 Val/kg |
| $\overline{M}_n$ | 1130 |
| $\overline{M}_w$ | 5244 |

Im IR-Spektrum sind weder die cyclische noch die allylische Doppelbindung (die einem Peak von 1 620 $cm^{-1}$ resp. 1 640 $cm^{-1}$ entsprechen) nachweisbar.

Beispiel 7

Herstellung eines Copolymeren in Gegenwart eines Katalysators.

Man erhitzt in einer Stickstoffatmosphäre unter Rühren 10,1 g Allylbicyclo (2.2.1) hept-5-en-2,3-dicarbonsäureanhydrid, 11,6 g Methallylmethylbicyclo (2.2.1) hept-5-en-2,3-dicarbonsäureanhydrid der Formel

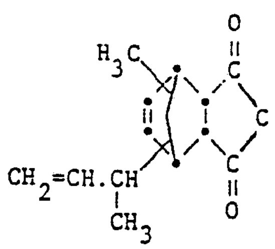

($K_{p2.7}$ = 117-120 °C

$n_{25}^{D}$ = 1,5060)

und 0,217 g p-Toluolsulfonsäure-monohydrat während 24 Stunden auf 180 °C. Man erhält in quantitativer Ausbeute ein braunes Festharz mit folgenden Eigenschaften :

| | |
|---|---|
| Erweichungspunkt (EP) | 80,5 °C |
| Anhydridgehalt | 4,15 Val/kg |
| Säuregehalt | 0,23 Val/kg |
| $\overline{M}_n$ | 501 |
| $\overline{M}_w$ | 718 |

Anwendungsbeispiele

Epoxypressmassen werden unter Verwendung des erfindungsgemässen Polymers aus Beispiel 3 hergestellt.

Beispiel A

11 Gewichtsteile des erfindungsgemässen Polymers werden mit 74,5 Gewichtsteilen Quarzmehl in eine Kugelmühle eingewogen und während 10 Stunden gemahlen. Nachher werden 12,8 Gewichtsteile epoxydierter Kresolnovolak (Epoxidgehalt : 4,3 Aeq./kg), 1,1 Gewichtsteile Zinkstearat, 0,1 Gewichtsteile Eisen(III)-Acetyl-acetonat und 0,5 Gewichtsteile Gasruss dem Polymer zugefügt, und das Gemisch wird

während weiterer 15 Stunden gemahlen. Zuletzt wird die Masse in einem Doppelschneckenextuder bei 100 °C Manteltemperatur zusammengeschmolzen und nach der Abkühlung gemahlen.

Die Formassen werden in 170 °C heissen Stahlformen nach üblichen Verfahren ausgehärtet und zu Prüfkörpern verarbeitet, welche die folgenden Eigenschaften aufweisen :

| | |
|---|---|
| Formschwund | 0,5 % (Längen-%) |
| Biegefestigkeit (ISO* 178) | 100 N/mm² |
| Verlustfaktor tg δ/50Hz | 0,026 |
| ε/50Hz | 4,9 |
| (DIN** 53 483) | |

*ISO = International Standardizing Organisation
**DIN = Deutsches Institut für Normung e.V.

## Beispiel B

6 Gewichtsteile des erfindungsgemässen Polymers werden mit 40 Gewichtsteilen Quarzmehl in einem Trockenmischer während 10 Stunden gemahlen. Anschliessend werden dem Gemisch 34,9 Gewichtsteile kurze Glasfasern, 17,8 Gewichtsteile Epoxidharz auf der Basis von Bisphenol A, d.h. 2,2-Bis(p-hydroxyphenyl)propan, mit einem Epoxidgehalt von 1,7 Aeq./kg, 0,6 Gewichtsteile OP-Wachs® der Fa. Hoechst als Formtrennmittel, 0,5 Gewichtsteile eines Farbstoffes und 0,2 Gewichtsteile 2-Aethylimidazol zugefügt. Dieses Gemisch wird in einem Schnellmischer während 120 Sekunden homogenisiert, danach im Zweiwalzenkalander bei 90 °C zusammengeknetet und ausgewalzt. Das erhaltene Flachstück wird gemahlen und das Mahlgut wie in Beispiel A beschrieben zu Prüfkörpern verarbeitet.

Die so hergestellte Epoxypressmasse weist folgende Eigenschaften auf :

| | |
|---|---|
| Formschwund | 0,5 % |
| Biegefestigkeit (ISO 178) | 130 N/mm² |
| Wärmeformbeständigkeit (ISO 75) | 190 °C |
| Verlustfaktor tg δ/50Hz | 0,02 |
| ε/50Hz | 4,8 |
| (DIN 53 483) | |

## Beispiel C

Je 11,9 Gewichtsteile des erfindungsgemässen Polymers und Triglycidylisocyanurat, 74,5 Gewichtsteile Wollastonit, 0,2 Gewichtsteile Imidazol, 1,0 Gewichtsteile OP-Wachs® der Fa. Hoechst als Formtrennmittel und 0,5 Gewichtsteile eines Farbstoffes werden in einem Trockenmischer während 40 Stunden gemahlen. Das Produkt wird tablettiert, die Tabletten werden zerkleinert, und es wird ein Granulat mit Korngrösse 0,2-4,0 mm herausgesiebt. Nach der Verarbeitung zu Formlingen werden die folgenden Eigenschaften an den Prüfkörpern bestimmt :

| | |
|---|---|
| Formschwund | 0,3 % |
| Biegefestigkeit (ISO 178) | 110 N/mm² |
| Wärmeformbeständigkeit (ISO 75) | 170 °C |
| Kriechstromfestigkeit (DIN 53 480 ; Methode KB) | > 600 V. |

In den folgenden Beispielen D-H werden Laminate unter Verwendung des erfindungsgemässen Polymers aus Beispiel 3 und der folgenden Epoxidharze hergestellt :

Epoxidharz I : Flüssiges Epoxidharz auf der Basis von Bisphenol-A-diglycidyläther (Epoxidgehalt : 5,20-5,35 Aeq./kg)
Epoxidharz II : Epoxidharz auf der Basis von Tetrabrombisphenol-A-diglycidyläther (Epoxidgehalt : 2,4-3,1 Aeq./kg)
Epoxidharz III : Epoxidharz auf der Basis von Tetrabrombisphenol-A-diglycidyläther (Epoxidgehalt : 2,0-2,2 Aeq./kg)
Epoxidharz IV : N,N,N',N'-Tetraglycidyl-4,4'-diaminodiphenylmethan (Epoxidgehalt : ca. 8 Aeq./kg)
Epoxidharz V : Festes Epoxidharz auf der Basis von Bisphenol-A-diglycidyläther (Epoxidgehalt : 1,90-2,0 Aeq./kg)
Epoxidharz VI : ein epoxidierter Phenolnovolak (Epoxidgehalt : 5,5-5,8 Aeq./kg)

Die Eigenschaften der hergestellten Laminate sind in Tabelle 2 zusammengefasst.

## Beispiel D

Es wird eine Lösung aus 73 g Epoxidharz I, 162 g Epoxidharz II, 129 g Epoxidharz III und 240 g Methyläthylketon hergestellt.

Dieser Lösung werden 191 g des erfindungsgemässen Polymers und 1,0 g Benzyldimethylamin zugegeben. Mit dieser Lösung wird Glasgewebe imprägniert, welches anschliessend bei 140 °C getrocknet wird. Es entsteht ein sogenanntes Prepreg. Je 8 Lagen dieses Prepregs werden während 2 Stunden bei 200 °C und einem Druck von $30 \cdot 10^4$ Pa verpresst, wodurch eine Laminatplatte entsteht.

## Beispiel E

Es wird eine Lösung aus 116 g Epoxidharz I, 74,8 g Epoxidharz II, 78 g Epoxidharz IV und 260 g Methyläthylketon hergestellt. Dieser Lösung werden 347 g des erfindungsgemässen Polymers zugesetzt und gelöst. Diese Lösung wird zur Herstellung eines Laminates, wie in Beispiel D beschrieben, verwendet.

## Beispiel F

Es wird eine Lösung aus 100 g Epoxidharz I, 100 g Epoxidharz II, 190 g Epoxidharz V und 350 g Methyläthylketon hergestellt. In dieser Lösung werden 212 g des erfindungsgemässen Polymers und 0,4 g Benzyldimethylamin gelöst. Die erhaltene Lösung wird zur Herstellung eines Laminates gemäss Beispiel D verwendet.

## Beispiel G

Es wird eine Lösung aus 121 g Epoxidharz I, 120,6 g Epoxidharz II, 134,4 g Epoxidharz V und 400 g Methyläthylketon hergestellt. In dieser Lösung werden 224,4 g des erfindungsgemässen Polymers und 0,4 g Benzyldimethylamin gelöst. Die erhaltene Lösung wird zur Herstellung eines Laminates analog Beispiel D verwendet, jedoch mit dem Unterschied, dass das imprägnierte Glasgewebe bei 150 °C getrocknet wird.

## Beispiel H

Es wird eine Lösung aus 185 g Epoxidharz I, 144,8 g Epoxidharz II, 109,8 g Epoxidharz VI und 530 g Methyläthylketon hergestellt. In dieser Lösung werden 355 g des erfindungsgemässen Polymers und 0,6 g Benzyldimethylamin gelöst. Die erhaltene Lösung wird zur Herstellung eines Laminates analog Beispiel D verwendet, jedoch mit dem Unterschied, dass das imprägnierte Glasgewebe bei 160 °C getrocknet wird.

Tabelle 2

| Eigenschaften der Laminate | Anwendungsbeispiele | | | | |
|---|---|---|---|---|---|
| | D | E | F | G | H |
| Glasumwandlungstemperatur bestimmt mittels DTA* (°C) | 179 | 182 | 180 | 180 | 180 |
| Kochwasseraufnahme nach 4 Stunden in $H_2O$ (Gew.-%) bei 100°C | 0,17 | 0,47 | 0,27 | 0,25 | 0,37 |
| Interlaminare Scherfestigkeit nach ASTM D 2344 ($N/mm^2$) | 47 | 31 | 42 | 38 | - |
| Brennbarkeit nach UL 94** | V-0 | V-0 | V-0 | V-0 | V-0 |

*DTA : Differential-Thermoanalyse

**UL 94 : Messung der Brennbarkeit von Kunststoffen nach Verfahren der Underwriters' Laboratories (U.S.A.) V-O entspricht dem folgenden Verhalten nach Herausnahme aus der Flamme : Der Prüfkörper brennt nicht länger als 10 Sekunden. Die durchschnittliche Brennzeit von 5 Prüfkörpern übersteigt nicht 5 Sekunden. Der Prüfkörper tropft nicht während des Brennens.

**Patentansprüche**

1. Polymere erhältlich durch Polymerisation eines oder mehrerer Anhydride der Formel I

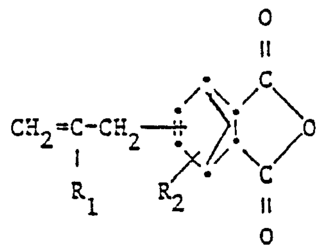

(I)

worin $R_1$ und $R_2$ unabhängig voneinander Wasserstoff oder Methyl bedeuten, mit Ausnahme von Homopolymeren erhältlich durch Polymerisation von Methallylbicyclo [2.2.1]hept-5-en-2,3-dicarbonsäureanhydrid.

2. Polymere nach Anspruch 1, dadurch gekennzeichnet, dass die Polymere Homopolymere aus einem Anhydrid der Formel I sind.

3. Polymere nach Anspruch 1, worin $R_1$ in der Formel I für Wasserstoff steht.

4. Polymere nach Anspruch 1, worin $R_1$ und $R_2$ in der Formel I für Wasserstoff stehen.

5. Polymere nach Anspruch 2, worin $R_1$ und $R_2$ in der Formel I für Wasserstoff stehen.

6. Verfahren zur Herstellung von Polymeren, dadurch gekennzeichnet, dass man ein oder mehrere Anhydride der Formel I

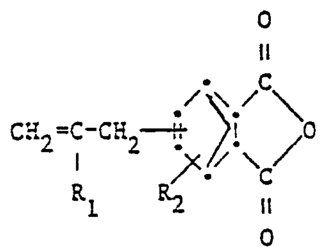

(I)

worin $R_1$ und $R_2$ unabhängig voneinander Wasserstoff oder Methyl bedeuten in Abwesenheit eines Katalysators auf eine Temperatur zwischen 150 °C und 350 °C erhitzt.

7. Verfahren nach Anspruch 6, dadurch gekennzeichnet, dass man ein Anhydrid der Formel I gemäss Anspruch 1 auf eine Temperatur von 180 bis 230 °C erhitzt.

8. Verfahren nach Anspruch 7, dadurch gekennzeichnet, dass man ein Anhydrid der Formel I gemäss Anspruch 1 während 12 bis 24 Stunden erhitzt.

9. Härtbare Gemische enthaltend ein Polymer erhältlich durch Polymerisation eines oder mehrerer Anhydride der Formel I

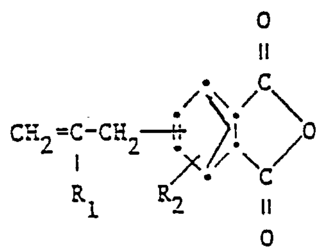

(I)

worin $R_1$ und $R_2$ unabhängig voneinander Wasserstoff oder Methyl bedeuten, und eine Polyepoxidverbindung mit durchschnittlich mehr als einer Epoxidgruppe im Molekül.

10. Das unter Verwendung des Gemisches nach Anspruch 9 durch Härten erhaltene Produkt.

11. Verwendung der Polymeren aus einem oder mehreren Anhydriden der Formel I gemäss Anspruch 9 als Härter für Epoxidharze.

**Claims**

1. A polymer which can be obtained by polymerization of one or more anhydrides of the formula I

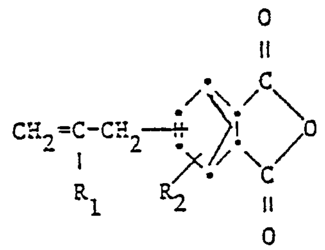

(I)

in which $R_1$ and $R_2$ independently of one another are hydrogen or methyl, with the exception of homopolymers which can be obtained by polymerization of methallylbicyclo[2.2.1]hept-5-ene-2,3-dicarboxylic anhydride.

2. A polymer according to claim 1, wherein the polymer is a homopolymer formed from an anhydride of the formula I.

3. A polymer according to claim 1, in which $R_1$ in the formula I is hydrogen.

4. A polymer according to claim 1, in which $R_1$ and $R_2$ in formula I are hydrogen.

5. A polymer according to claim 2, in which $R_1$ and $R_2$ in formula I are hydrogen.

6. A process for the preparation of a polymer, which comprises heating one or more anhydrides of the formula I

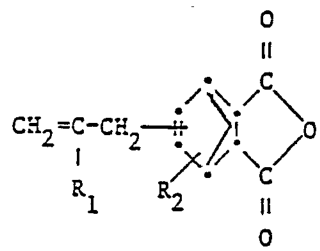

(I)

in which $R_1$ and $R_2$ independently of another are hydrogen or methyl, in the absence of a catalyst, at a temperature between 150 °C and 350 °C.

7. A process according to claim 6, wherein an anhydride of the formula I according to claim 1 is heated at a temperature of 180 to 230 °C.

8. A process according to claim 7, wherein an anhydride of the formula I according to claim 1 is heated for 12 to 24 hours.

9. A curable mixture containing a polymer which can be obtained by polymerization of one or more anhydrides of the formula I

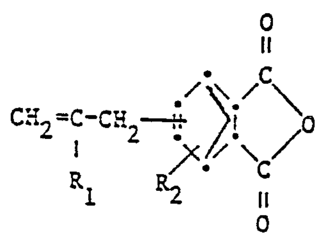

(I)

in which $R_1$ and $R_2$ independently of one another are hydrogen or methyl, and containing a polyepoxide compound containing on average more than one epoxide group in the molecule.

10. The product obtained after curing, when using the mixture according to claim 9.

11. The use of a polymer formed from one or more anhydrides of the formula I in accordance with claim 9 as a curing agent for epoxy resins.

**Revendications**

1. Polymères qui peuvent être obtenus par polymérisation d'un ou de plusieurs anhydrides répondant à la formule I :

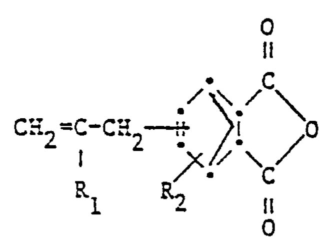

(I)

dans laquelle $R_1$ et $R_2$ représentent chacun, indépendamment l'un de l'autre, l'hydrogène ou un radical méthyle, sauf les homopolymères qui peuvent être obtenus par polymérisation de l'anhydride d'un acide méthallyl-bicyclo[2.2.1]-heptène-5-dicarboxylique-2,3.

2. Polymères selon la revendication 1 caractérisés en ce qu'ils sont des homopolymères d'un anhydride de formule I.

3. Polymères selon la revendication 1 caractérisés en ce que $R_1$, dans la formule I, représente l'hydrogène.

4. Polymères selon la revendication 1 caractérisés en ce que $R_1$ et $R_2$, dans la formule I, représentent chacun l'hydrogène.

5. Polymères selon la revendication 2 caractérisés en ce que, dans la formule I, $R_1$ et $R_2$ représentent chacun l'hydrogène.

6. Procédé pour préparer des polymères, procédé caractérisé en ce qu'on chauffe un ou plusieurs anhydrides répondant à la formule I :

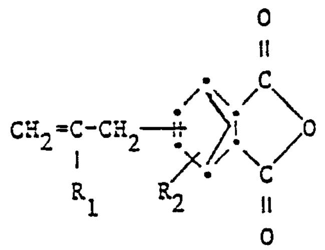

(I)

dans laquelle $R_1$ et $R_2$ représentent chacun, indépendamment l'un de l'autre, l'hydrogène ou un radical méthyle, à une température comprise entre 150 et 350 °C, sans catalyseur.

7. Procédé selon la revendication 6, caractérisé en ce qu'on chauffe un anhydride de formule I selon la revendication 1 à une température de 180 à 230 °C.

8. Procédé selon la revendication 7, caractérisé en ce qu'on chauffe un anhydride de formule I selon la revendication 1 pendant 12 à 24 heures.

9. Mélanges durcissables contenant un polymère qui peut être obtenu par polymérisation d'un ou de plusieurs anhydrides répondant à la formule I :

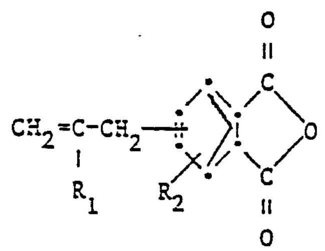

(I)

dans laquelle $R_1$ et $R_2$ représentent chacun, indépendamment l'un de l'autre, l'hydrogène ou un radical méthyle, et un composé polyépoxydique contenant en moyenne plus d'un radical époxy par molécule.

10. Produit que l'on obtient par durcissement en utilisant un mélange selon la revendication 9.

11. Application des polymères d'un ou de plusieurs anhydrides de formule I selon la revendication 9 comme durcisseurs pour des résines époxydiques.